Europäisches Patentamt

European Patent Office

Office européen des brevets

(11) Publication number: **0 162 141**
A1

## (12) EUROPEAN PATENT APPLICATION

(21) Application number: **84115395.0**

(22) Date of filing: **13.12.84**

(51) Int. Cl.⁴: **B 62 D 1/16**
F 16 D 3/06, F 16 D 3/78

(30) Priority: **21.05.84 IT 6751184**

(43) Date of publication of application:
**27.11.85 Bulletin 85/48**

(84) Designated Contracting States:
**DE FR GB SE**

(71) Applicant: **CORINT S.r.l.**
**Strada degli Alberoni 18/2**
**I-10133 Torino(IT)**

(72) Inventor: **Cordiano, Ettore**
**Strada degli Alberoni 18/2**
**I-10133 Torino(IT)**

(74) Representative: **Notaro, Giancarlo et al,**
**c/o Jacobacci-Casetta & Perani S.p.A. Via Alfieri, 17**
**I-10121 Torino(IT)**

(54) Steering column for motor vehicles, with a flexible slip coupling resistant to bending moments.

(57) A steering column for motor vehicles is connected to the pinion of a steering box by a universal joint and includes a flexible coupling (14, 15, 16, 17) which can yield axially and withstand bending moments in the plane of the shaft (13, 18) on which it is mounted. The flexible coupling consists of an axially deformable rubber disc (15) the opposite faces of which are connected to respective drive members (14, 17) fixed to two coaxial shaft elements (13, 18). The disc (15) and drive members (14, 16) are connected by pins (22) slidable in the holes in the disc (15), so that the overall length of the steering column can vary.

FIG. 4

EP 0 162 141 A1

Steering column for motor vehicles, with a flexible slip coupling resistant to bending moments

The present invention relates to a steering column for motor vehicles, of the type comprising a shaft carrying a steering wheel and supported at at least one point on a support fixed to the body of the vehicle, a universal joint connecting the steering column to a steering member of a steering box, a flexible coupling located between the universal joint and the steering wheel, and constituted by an elastically deformable disc and two drive members connected to respective faces of the disc, one of the drive members being fixed to a first shaft element connected rigidly to a fork of the universal joint and the other drive member being rigid with a second shaft element connected to the steering wheel.

Steering columns of this type often also include an intermediate shaft between the universal joint and the shaft carrying the steering wheel, the intermediate shaft being connected to the steering wheel shaft by a second universal joint. In such cases, the flexible coupling may be incorporated in the intermediate shaft, whereby the first and second shaft elements constitute parts of this shaft.

On modern motor vehicles frequent use is made of a flexible coupling mounted on the steering column, between the steering wheel and steering box, in order to isolate the steering wheel and the entire vehicle body from the vibrations transmitted from the engine and from the wheels jolted by any unevenness of the road surface. These couplings should be flexible so as to achieve their isolating function, and be sufficiently rigid torsionally to transmit the torque from the steering wheel to the steering box without excessive elastic yielding. Generally, they are of the type made from a rubber disc reinforced torsionally by appropriate rubber inserts, and two drive forks mounted on the opposite faces of the disc. The steering column is normally constituted by two portions of shaft inclined to each other and to the shaft of the pinion, worm or other steering member of the steering box, these portions being connected to each other and to the pinion shaft by means of universal joints or the like. In these conditions, there are considerable moments acting on the forks of the universal joints in the plane of the forks and the shafts, which tend to alter the relative inclination of the shafts. These moments, which will be termed "conic moments" in the following, increase with the inclination of the shafts.

If there are no flexible couplings other than the universal joints, these conic moments are absorbed by the shafts as bending moments without causing any problem. If a flexible coupling of the type described above is mounted on any of the shafts, however, the conic moments are discharged onto the rubber disc and deform it, preventing the steering column from functioning correctly. There are other types of flexible couplings without discs, which have characteristics such as to withstand these conic moments without excessive conic yielding, but they cannot attain the axial flexibility of a disc-type coupling.

The object of the present invention is to provide a steering column of the aforesaid type with a disc-type flexible coupling which is flexible axially like a normal coupling of this type and can withstand conic moments without yielding.

According to the present invention, this object is achieved by a steering column of the aforesaid type, characterised in that the first shaft is supported slidably and rotatably by the second shaft element at at least one point outside the plane of the deformable disc, so as to keep the shaft elements coaxial with each other in all operating conditions and permit relative rotation and axial displacement between them.

A further important characteristic of the invention is that it provides for the realisation of a coupling in which the drive members can slide axially relative to one another if necessary, with the advantages that will come to light in the following.

Several preferred embodiments of the present invention will now be described, by way of example, with reference to the appended drawings, in which:

Figure 1 shows a prior art steering column in two portions with a rack-type steering box and no flexible coupling;

Figure 2 shows a steering column with a flexible coupling according to the invention;

Figure 3 is an axial view of a coupling according to the invention;

Figure 4 is a longitudinal sectional view of the coupling along the line X-X of Figure 3;

Figure 5 is a sectional view similar to Figure 4 of part of a steering column according to another embodiment of the invention;

Figure 6 is a view similar to Figure 5 of a further embodiment of the invention, and

Figure 7 is an axial view of the coupling of Figure 6.

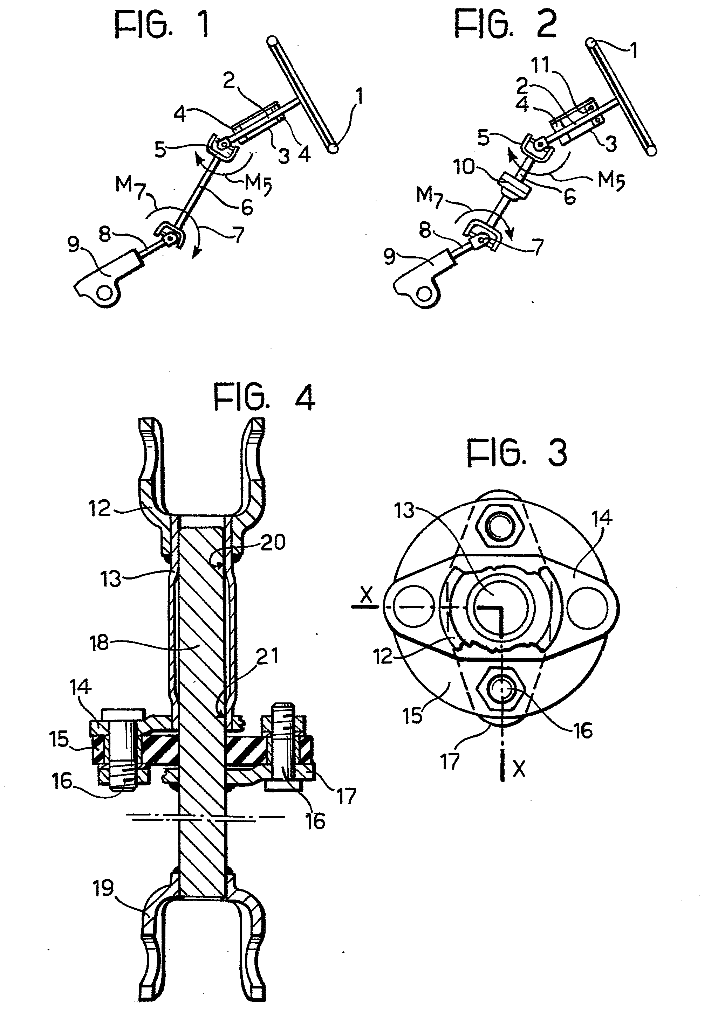

Figure 1 shows a two-part steering column which connects a steering wheel 1 to the pinion 8 of a steering box 9, for example of the rack type. The shaft 2 carrying the steering wheel 1 is supported by two bushes or roller bearings 4 carried by a support 3 fixed to the body of the vehicle in a known manner, not illustrated. At the lower end of the shaft 2 is fixed a fork of a universal joint 5 the other fork of which is carried at one end of an intermediate shaft 6. The opposite end of the intermediate shaft carries one fork of a second universal joint 7 the second fork of which is connected to the shaft of the pinion 8 of the steering box 9.

The functioning of this steering column is evident and is not described here.

The forks of the universal joints 5 and 7 are acted upon by conic moments $M_5$ and $M_7$, shown in the plane of the drawing for simplicity, which are variable upon rotation of the column and subject the shafts 2, 6, 8 to bending moments.

Figure 2 shows a similar steering column to Figure 1, with a disc-type flexible coupling 10 incorporated in the intermediate shaft 6. The parts common to Figures 1 and 2 are indicated by the same reference numerals.

In Figure 2, one of the bushes or bearings 4 is replaced by a bearing 11 which anchors the shaft 2 axially. While, in the steering column of Figure 1, the pinion 3 secures the shaft 2 and steering wheel 1 axially by means of the universal joints 5, 7 and the shaft 6, the shaft 2 of the steering column of Figure 2 could move axially, due to the presence of the flexible coupling 10, if it were not anchored with the bearing 11. The coupling 10 of Figure 2 should be able to withstand the conic moments $M_5$ and $M_7$.

Figures 3 and 4 show how the flexible coupling according to the invention, for example the coupling 10 of Figure 2, is made in such a way that it can resist the conic moments $M_5$ and $M_7$. The intermediate shaft 6 is constituted by a tubular shaft 13 to one end of which is fixed a fork 12 of a universal joint, for example the universal joint 5 of Figure 2. At its opposite end, the shaft 13 carries one drive member 14 of the flexible coupling. A shaft 18 bears the second drive member 17 of the flexible coupling and the fork 19 of the second universal joint, for example the joint 7 of Figure 2, and is supported at points 20, 21 by the tubular shaft element 13. An elastic disc 15 is mounted between the drive members 14 and 17 by means of bolts 16. With this arrangement, the two shafts 13 and 18 are free to move axially relative to one another following deformation of the disc, and are connected torsionally by the latter.

It is also possible to eliminate the support between the two shafts 13, 18 vicinity of the elastic disc,

**0162141**

that is, at the zone 21, since the disc is capable of centering the shafts relative to one another in this zone.

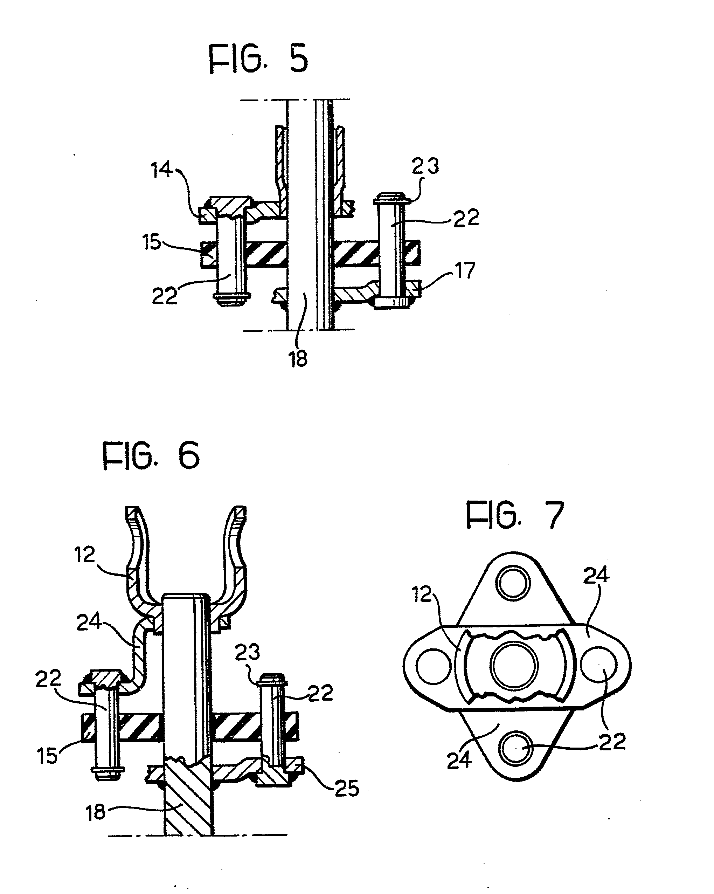

Figure 5 shows a flexible coupling similar to that of Figure 4, in which the disc 15 is connected to the drive members 14, 17 by pins 22 instead of the bolts 16 shown in Figure 4. The pins 22 are captive in the two metal members 14, 17 and are provided with stop rings 23, which have the sole purpose of preventing any accidental disconnection of the coupling.

Clearly with this embodiment, it is possible for the shaft 13 to slide relative to the shaft 18 within the limits allowed by the stop rings 23, fulfilling the function of the coupling.

This characteristic may be important for two reasons. First of all, there is the safety aspect. In fact, with a coupling of this type, the backward movement of the steering wheel in the event of a head-on collision of the vehicle is reduced, since the steering box can move a certain distance towards the interior without moving the steering wheel. Secondly, it permits the installation of the steering wheel-column-steering box assembly to be simplified in that no adjustment of the distance between the steering box and the fixing of the steering column support is required, which may also be useful in the automation of the production-line installation of the assembly.

The sliding characteristic is certainly obtainable by other means, for example by a splined coupling between the shafts 13 and 18, but this would involve an appreciable increase in cost, above all because considerable precision would be necessary in the machining of the teeth to minimise any play in the coupling. Play of the order of one tenth of a millimetre between the teeth would, in fact, cause totally unacceptable play on the steering wheel, given the small initial diameter of the toothing.

A coupling of the type proposed, however, has the following advantages:

(a) the distance between the axes of the pins is certainly greater than the initial diameter of any toothing;

(b) any play can be completely eliminated by creating a slight interference between the pins and the holes in the rubber disc or leaving a small difference in the distances between the axes of the pins and the holes, so as to create a force-fit between the pins and the elastic disc. The latter solution may be convenient to prevent any friction between the rubber and pins from making sliding difficult; metal or plastics bushes may be inserted in the holes of the disc to prevent rubber-metal contact.

A device such as that proposed may also be used to absorb energy in the event of a head-on collision. In fact, with appropriate shaping of the members of the coupling, it is possible, after a certain relative displacement between the two shafts 13, 18, for the drive members to strike one another and become deformed, thus absorbing energy. The amount of energy can be adjusted by varying the strength of the two drive members. Figures 6 and 7 illustrate an embodiment of this type, which, among other things, constitutes a further simplification of the device. The drive member 24 of the flexible coupling is connected directly to the fork 12 of a universal joint and therefore constitutes the tubular shaft 13 of Figures 4 and 5. The shaft 18 is centered by the elastic disc 15 and by a sliding seat 27 formed in the same fork 12. The shape of the drive member 24 is such that, after a certain relative sliding movement of the two shafts dependent on the length of the pins, it comes into contact with the drive members 25 rigid with the second shaft 18. From this point on, the two shafts can again slide relative to each other, deforming only the two drive members and thus absorbing energy Clearly, the same result may be obtained by positioning the drive member 24 on a hollow shaft, as shown in the previous drawings.

While the device is illustrated and described in relation to several preferred embodiments, it will be evident to those versed in the art that several variants in the form and detail thereof may be made, without departing from the spirit and scope of the invention.

CLAIMS

1.    A steering column for motor vehicles, of the type comprising:

- a shaft (2) carrying a steering wheel (1) and supported at at least one point by a support (4; 11) fixed to the body of the vehicle;

- a universal joint (7) connecting the steering column to a steering member (8) of a steering box (9);

- a flexible coupling (10) located between the universal joint (5) and the steering wheel (1), and constituted by an elastically deformable disc (15) and two drive members (14, 17; 24, 25) connected to respective faces of the disc, one (17; 25) of the drive members being fixed to a first shaft element (18) connected rigidly to a fork (19) of the universal joint (7) and the other drive member (14; 24) being rigid with a second shaft element (13; 24) connected to the steering wheel (1),

characterised in that the first shaft element (18) is supported rotatably and slidably by the second shaft element (13) at at least one point (20, 21) outside the plane of the deformable disc (15), so as to keep the shaft elements (13, 18) coaxial with each other in all operating conditions and permit relative rotation and axial displacement between them.

2.    A steering column according to Claim 1, in which it further includes an intermediate shaft (6) between the universal joint (7) and the shaft (2) carrying the steering wheel (1), and a second universal joint (5) connecting the intermediate shaft (6) to the steering wheel shaft (2), characterised in that the flexible coupling (10) is incorporated in the intermediate shaft (6) and the shaft elements (13, 18) constitute parts of this shaft (6).

3. A steering column according to Claim 1 or Claim 2, characterised in that one drive member of the coupling (10) is constituted by a metal member (24) connected directly to the fork (12) of a universal joint (5) and shaped in such a way as to constitute one of said shaft elements (13, 18).

4. A steering column according to Claim 1, Claim 2 or Claim 3, characterised in that the drive members (14, 17) of the flexible coupling (10) are connected to the deformable disc (15) by bolts (16) or like fixing means.

5. A steering column according to Claim 1, Claim 2 or Claim 3, characterised in that at least one of the drive members (24, 25) of the flexible coupling (10) is connected to the deformable disc (15) by means of two or more pins (22) fixed rigidly to the drive member and slidable in corresponding holes in the disc.

6. A steering column according to any one of Claims 1 to 5, characterised in that the drive members (24, 25) are formed in such a way that, in the event of a head-on collision of the vehicle, the drive members can deform plastically to absorb energy.

7. A steering column according to any of the preceding claims, characterised in that the deformable disc (15) is constituted by a rubber member reinforced by metal inserts and having holes engaged by the bolts (16) or pins (22) connecting the disc (15) to the drive members (14, 17; 24, 25).

8. A steering column according to Claim 7, characterised in that the diameter of the holes in the disc (15) is slightly less than that of the pins (22) in such a way as to eliminate any play between the pins and the holes, while permitting the pins to slide in the holes.

9. A steering column according to Claim 7, characterised in that the distance between the axes of the pins (22) fixed to one or both drive members (24, 25) is slightly different from that between the axes of the holes in the disc, so as to create a force-fit of the pins in the holes and eliminate any play between the pins and the holes.

10. A steering column according to any one of Claims 5 to 8, characterised in that at least one of the pins (22) slidable in the holes of the disc (15) is provided with a stop ring (23).

0162141

FIG. 1

FIG. 2

FIG. 4

FIG. 3

# FIG. 5

# FIG. 6

# FIG. 7

# EUROPEAN SEARCH REPORT

European Patent Office

**0162141**

Application number

EP 84 11 5395

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 493 432 (VOITH) <br> * Claims; figures 1,2 * | 1 | B 62 D 1/16 <br> F 16 D 3/06 <br> F 16 D 3/78 |
| A | FR-A-2 049 617 (PAULSTRA) <br> * The whole document * | 1 | |
| A | FR-A-2 100 039 (VOLKSWAGEN) <br> * The whole document * | 1 | |
| A | FR-A-2 185 127 (PITNER) <br> * The whole document * | 1 | |
| A | FR-A-2 159 961 (RELIANCE) <br> * Claims; figures 1-6 * | 8 | |
| A | FR-A-2 430 539 (KLEBER-COLOMBES) | | **TECHNICAL FIELDS SEARCHED (Int. Cl.4)** <br><br> B 62 D <br> F 16 D |

The present search report has been drawn up for all claims

| Place of search | Date of completion of the search | Examiner |
|---|---|---|
| THE HAGUE | 11-06-1985 | PIRIOU J.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82